# EUROPÄISCHE PATENTSCHRIFT

(11) **EP 3 333 015 B1**
(45) Veröffentlichungstag und Bekanntmachung des Hinweises auf die Patenterteilung: **12.02.2020**
(21) Anmeldenummer: 17205612.9
(22) Anmeldetag: 06.12.2017
(51) Int. Cl.: B60P 3/34

(54) **BAUKONSTRUKTION UND FAHRZEUG MIT EINER BAUKONSTRUKTION**
STRUCTURE AND VEHICLE WITH STRUCTURE
CONSTRUCTION ET VÉHICULE COMPORTANT UNE CONSTRUCTION

(30) Priorität: 08.12.2016 DE 102016123834
(43) Veröffentlichungstag der Anmeldung: 13.06.2018
(73) Patentinhaber: König, Marc, 79100 Freiburg (DE)
(72) Erfinder: König, Marc, 79100 Freiburg (DE)
(74) Vertreter: RACKETTE Patentanwälte PartG mbB

(56) Entgegenhaltungen:
- US-A- 3 506 300
- US-A- 4 270 791
- US-A- 5 154 469

## Beschreibung

Die Erfindung betrifft eine Baukonstruktion gemäß dem Oberbegriff des Anspruches 1.

Die Erfindung betrifft weiterhin ein mit einer Baukonstruktion ausgestattetes Fahrzeug.

Eine derartige Baukonstruktion zum Aufnehmen von wahlweise in einem Innenraum angeordneten Gerätschaften und zum bedarfsweisen Bereitstellen eines den Innenraum erweiterten Nutzraums ist aus US 4 270 791 A bekannt. Diese Baukonstruktion verfügt über ein Zentralfestsegment und über eine Anzahl von in Bezug auf das Zentralfestsegment in wenigstens einer Expansionsrichtung in einer Ebene verschiebbar gelagerten Schiebesegmenten, die zwischen einer Kompaktstellung mit einem Minimalvolumen und einer Expansionsstellung mit einem Maximalvolumen verschiebbar sind. Dabei sind die Schiebesegmente als wenigstens ein Schiebesegment einer ersten Gruppe, wobei das oder jedes Schiebesegment der ersten Gruppe in wenigstens einer Expansionsrichtung in einer ersten Ebene verschiebbar ist, als wenigstens ein Schiebesegment einer zweiten Gruppe, wobei das oder jedes Schiebesegment der zweiten Gruppe in einer zu der oder jeder Expansionsrichtung rechtwinklig ausgerichteten Erweiterungsrichtung in wenigstens eine von der ersten Ebene verschiedene zweite Ebene verschiebbar ist, und als wenigstens ein Schiebesegment einer dritten Gruppe, wobei das oder jedes Schiebesegment der dritten Gruppe sowohl in die oder eine Expansionsrichtung in der ersten Ebene als auch in die zweite Richtung in die oder eine zweite Ebene verschiebbar ist, ausgebildet, wobei wenigstens ein Schiebesegment der dritten Gruppe mit jeweils einem Schiebesegment der beiden anderen Gruppen in Eingriff ist. Diese Baukonstruktion ist zum Führen der Schiebesegmente nach Art eines Exoskeletts aufgebaut.

Eine weitere Baukonstruktion zum Aufnehmen von wahlweise in einem Innenraum angeordneten Gerätschaften und zum bedarfsweisen Bereitstellen eines den Innenraum erweiternden Nutzraums ist aus DE 101 54 848 C1 bekannt. Die vorbekannte, als mobiler Container ausgestaltete Baukonstruktion verfügt über ein quaderförmiges, deckseitig geschlossenes Zentralfestsegment und über eine Anzahl von in Bezug auf das Zentralfestsegment in einer Ebene verschiebbar an dem Zentralfestsegment gelagerten Schiebesegmenten. Die Schiebesegmente greifen in Seitenwände des Zentralfestsegments ein und sind zwischen einer Kompaktstellung mit einem bei vollständigem Einschieben der Schiebesegmente eingenommenen Minimalvolumen und einer Expansionsstellung mit einem bei vollständigem Auszug der Schiebesegmente eingenommenen Maximalvolumen verschiebbar.

Aus DE 74 30 342 U ist ein ausfahrbarer, kastenförmiger Aufsatz für Fahrzeuge bekannt, der eine Anzahl von rechteckförmigen, umfänglich geschlossenen Schiebesegmenten aufweist. Die Schiebesegmente sind auf einer Dachseite des Fahrzeugs angeordnet und in ihren Abmessungen so dimensioniert, dass sie in einer Kompaktstellung ineinander liegend und in einer Expansionsstellung teleskopisch ausgezogen angeordnet sind, so dass die Nutzhöhe des Fahrzeugs vergrößert ist.

Weitere Baukonstruktionen mit Schiebesegmenten sind aus US 2 561 921 A, US 1 436 984 A, US 5 185 973 A und US 4 017 116 A bekannt.

Der Erfindung liegt die Aufgabe zugrunde, eine Baukonstruktion der eingangs genannten Art sowie ein mit einer derartigen Baukonstruktion ausgestattetes Fahrzeug anzugeben, die beziehungsweise das sich bei einem verhältnismäßig geringen Abstand der Seitenwände voneinander mit einem geringen Reibungsverlust durch eine sehr hohe Stabilität und eine gute Abdichtung auszeichnet.

Diese Aufgabe wird bei einer Baukonstruktion der eingangs genannten Art erfindungsgemäß mit den kennzeichnenden Merkmalen des Anspruchs 1 gelöst.

Dadurch, dass gemäß der Erfindung an den Wänden der Schiebesegmente rechtwinklig zueinander ausgerichtete Führungen sowie die Schiebesegmente gruppenweise mit einkragenden Rändern und auskragenden Rändern unterschiedlicher Länge, unter Einschluss von Schiebesegmenten anderer Gruppen und damit einer wechselnden Anordnung der Schiebesegmente einer Gruppe mit Umgreifen um ein Schiebesegment einer anderen Gruppe herum, mit mit zwischenliegenden Dichtlippen gebildeten umlaufenden Anlagebereichen ausgebildet sind, ergibt sich ein geringer Reibungsverlust bei einer hohen Stabilität und zugleich einer guten Abdichtung.

Weitere zweckmäßige Ausgestaltungen der Erfindung sind Gegenstand der Unteransprüche.

Bei einer zweckmäßigen Baukonstruktion verfügen für einen besonders geringen Reibungsverlust bei guter Stabilität die Führungen jeweils über eine Führungsschiene und über einen mit der betreffenden Führungsschiene in Eingriff stehenden Führungswagen.

Bei einer weiteren zweckmäßigen Baukonstruktion ist vorgesehen, dass die Schiebesegmente der drei Gruppen derart ineinander verschiebbar gelagert sind, dass das Minimalvolumen der Baukonstruktion in der Kompaktanordnung durch vollständiges Ineinanderschieben der Schiebesegmente der drei Gruppen mit eng benachbart zueinander angeordneten Seitenwänden und Deckwänden mit einem wandfreien Innenraum dem von dem äußersten Schiebesegment einer der Gruppen eingenommenen Volumen entspricht. Dadurch ist ein maximaler Nutzraum geschaffen.

Bei Weiterbildungen der vorgenannten zweckmäßigen Baukonstruktionen ist vorgesehen, dass das Zentralfestsegment und Schiebesegmente der zweiten Gruppe jeweils mit zwei Schiebesegmenten der dritten Gruppe in Eingriff sind, wobei die beiden Schiebesegmente der dritten Gruppe auf einander gegenüber liegenden Seiten des mit ihnen in Eingriff befindlichen Zentralfestsegments beziehungsweise Schiebesegments der zweiten Gruppe angeordnet sind. Dadurch ist aufgrund der beidseitig eines Schiebesegments zweiten Gruppe beziehungsweise des Zentralfestsegments angeordneten Schiebesegmenten der dritten Gruppe ein besonders großer Nutzraum geschaffen.

Bei einer weiteren zweckmäßigen Baukonstruktion ist vorgesehen, dass Schiebesegmente der ersten Gruppe sowie der dritten Gruppe in zwei rechtwinklig zueinander ausgerichteten Expansionsrichtungen verschiebbar sind und dass Schiebesegmente der ersten Gruppe sowie der dritten Gruppe in Eckbereichen zwischen mit Schiebesegmenten der zweiten Gruppe beziehungsweise mit dem Zentralfestsegment in Eingriff stehenden Schiebesegmenten der ersten Gruppe und der dritten Gruppe in Eingriff sind. Durch die zwei Expansionsrichtungen ist ein außerordentlich großer Nutzraum geschaffen.

Bei einer weiteren zweckmäßigen Baukonstruktion sind die auskragenden Ränder und die einkragenden Ränder wechselweise miteinander in Eingriff, um bei Verschieben eines Schiebesegments eine passive Mitnahme von anderen Schiebesegmenten sicherzustellen.

Bei einer weiteren zweckmäßigen Baukonstruktion sind Schiebesegmente einer Gruppe und das Zentralfestsegment mit Türflügeln ausgestattet sind, die in der Expansionsstellung dieser Schiebesegmente in den verschiedenen Ebenen miteinander fluchtend angeordnet sind. Dadurch ist eine gute Zugänglichkeit des Innenraums in der Expansionsstellung geschaffen.

Bei einer weiteren zweckmäßigen Baukonstruktion ist an dem oder jedem mit dem Zentralfestsegment in Eingriff stehenden Schiebesegment der ersten Gruppe wenigstens ein Trägerholm angebracht. Dadurch ergibt sich eine stabile Abstützung.

Vorteilhafterweise erstrecken sich bei der letztgenannten zweckmäßigen Baukonstruktion der Trägerholm oder Trägerholme in der ersten Richtung. Dadurch ist eine kompakte integrierte Abstützung bereitgestellt.

Bei einer weiteren zweckmäßigen Baukonstruktion sind an wenigstens einem Schiebesegment wenigstens einer Gruppe und an dem Zentralfestsegment als Gerätschaften wahlweise Einbauelemente mit dem Vorteil einer guten Nutzbarkeit des Innenraums angebracht.

Bei einer vorteilhaften Weiterbildung der letztgenannten zweckmäßigen Baukonstruktion grenzen in der Kompaktstellung wenigstens einige Einbauelemente direkt aneinander. Dadurch ist in der Kompaktstellung der Innenraum optimal genutzt.

Zweckmäßigerweise ist bei mit Einbauelementen ausgestatteten Baukonstruktionen wenigstens ein Einbauelement mit einer flexiblen Versorgungsleitung verbunden. Dadurch lässt sich die Baukonstruktion mit beispielsweise Strom, Wasser und/oder Gas versorgen.

Bei einem zweckmäßigen Fahrzeug ist der Trägerholm beziehungsweise sind Trägerholme verschiebbar an einer Karosserie des Fahrzeugs gelagert. Dadurch ergibt sich eine gute Abstützung der Baukonstruktion an dem üblicherweise bereits standstabilen Fahrzeug.

Bei einem weiteren zweckmäßigen Fahrzeug sind die Versorgungsleitung oder Versorgungsleitungen mit dem Fahrzeug verbunden. Dadurch lässt sich vorteilhafterweise das Fahrzeug selbst mit Versorgungs- und zweckmäßigerweise auch mit Entsorgungsbehältern bestücken.

Weitere zweckmäßige Ausgestaltungen und Vorteile der Erfindung ergeben sich aus der nachfolgenden Beschreibung eines Ausführungsbeispiels der Erfindung mit Bezug auf die Figuren der Zeichnung.

Es zeigen:
- Fig. 1: in einer perspektivischen Ansicht ein Ausführungsbeispiel mit einem Fahrzeug und mit einer an dem Fahrzeug angebrachten Baukonstruktion, bei der Schiebesegmente in einer Kompaktstellung angeordnet sind,
- Fig. 2: in einer Schnittansicht durch das Fahrzeug und die Baukonstruktion das Ausführungsbeispiel gemäß Fig. 1 mit den Schiebesegmenten in der Kompaktstellung,
- Fig. 3: in einer perspektivischen Ansicht das Ausführungsbeispiel gemäß Fig. 1 mit abgenommenen äußeren Schiebesegmenten sowie abgenommenen deckseitigen Gerätschaften und mit den übrigen Schiebesegmenten in der Kompaktstellung mit Blick in einen mit weiteren Gerätschaften ausgestatteten Innenraum,
- Fig. 4: in einer perspektivischen Ansicht das Ausführungsbeispiel gemäß Fig. 1 mit den Schiebesegmenten in einer Expansionsstellung,
- Fig. 5: in einer perspektivischen Ansicht das Ausführungsbeispiel gemäß Fig. 1 mit den Schiebesegmenten in der Anordnung gemäß Fig. 4 mit in einem ersten Bereich aufgerissenen Seitenwänden und Deckwänden mit Blick in den gegenüber der Anordnung gemäß Fig. 3 nunmehr um einen Nutzraum vergrößerten Innenraum im Bereich einer Sanitärzelle und einer Küchenzeile,
- Fig. 6: in einer perspektivischen Ansicht das Ausführungsbeispiel gemäß Fig. 1 in der Anordnung gemäß Fig. 5 mit in einem zweiten Bereich aufgerissenen Seitenwänden mit Blick in den gegenüber der Anordnung gemäß Fig. 3 nunmehr um den Nutzraum vergrößerten Innenraum im Bereich von Schrankelementen und Sitzelementen,
- Fig. 7: in einer perspektivischen Ansicht das Ausführungsbeispiel gemäß Fig. 1 in der Anordnung gemäß Fig. 5 mit in dem zweiten Bereich aufgerissenen Seitenwänden mit Blick in den nach Versenken der Sitzelemente nunmehr mit Schlafelementen ausgestatteten Innenraum,
- Fig. 8: in einer perspektivischen Ansicht die Baukonstruktion des Ausführungsbeispiels gemäß Fig. 1 ohne Gerätschaften und ohne Fahrzeug mit entfernten Schiebesegmenten einer zweiten Gruppe,
- Fig. 9: in einer Schnittansicht in einer Querrichtung die Baukonstruktion des Ausführungsbeispiels gemäß Fig. 1 erneut in der Kompaktstellung,
- Fig. 10: in einer Schnittansicht in der Ebene eines Zentralfestsegments die Baukonstruktion des Ausführungsbeispiels gemäß Fig. 1 in der Anordnung gemäß Fig. 9,
- Fig. 11: in einer Schnittansicht in einer Längsrichtung einen Wandbereich von Schiebesegmenten der Baukonstruktion des Ausführungsbeispiels gemäß Fig. 1 in der Expansionsstellung,
- Fig. 12: in einer Schnittansicht entsprechend Fig. 11 in einer weiteren Schnittebene die Baukonstruktion des Ausführungsbeispiels gemäß Fig. 1 in der Expansionsstellung,
- Fig. 13: in einer perspektivischen Ansicht einen Ausschnitt der beispielhaften Baukonstruktion im Stoßbereich von Schiebesegmenten,
- Fig. 14: in einer weiteren perspektivischen Ansicht einen Ausschnitt der beispielhaften Baukonstruktion im Stoßbereich von Schiebesegmenten,
- Fig. 15: in einer perspektivischen Ansicht ein weiteres Ausführungsbeispiel einer Baukonstruktion mit in zwei Expansionsrichtungen verschiebbaren Schiebesegmenten in einer Expansionsstellung,
- Fig. 16: in einer perspektivischen Ansicht das Ausführungsbeispiel gemäß Fig. 15 mit den Schiebesegmenten in einer gegenüber der Expansionsstellung verkleinerten ersten Zwischenstellung,
- Fig. 17: in einer perspektivischen Ansicht das Ausführungsbeispiel gemäß Fig. 15 mit den Schiebesegmenten in einer gegenüber der ersten Zwischenstellung verkleinerten zweiten Zwischenstellung und
- Fig. 18: in einer perspektivischen Ansicht mit den Schiebesegmenten in einer Kompaktstellung.

Einleitend und klarstellend sei erwähnt, dass in der nachfolgenden Beschreibung Begriffe wie "links", "rechts", "vorn", "hinten", "horizontal", "vertikal", "oben" und "unten" aus Gründen der Anschaulichkeit gewählt sind und sich auf eine betriebstypische Anordnung der damit bezeichneten Komponenten, nicht jedoch auf ein absolut raumfestes Koordinatensystem beziehen. So beziehen sich beispielsweise die Begriffe "links", "rechts", "vorn", "hinten" soweit nicht anders erwähnt auf eine Fahrtrichtung nach vorne, während sich die Begriffe "horizontal", "vertikal", "oben" und "unten" auf die Richtung der Schwerkraft beziehen. Es versteht sich jedoch, dass diese aus Anschaulichkeitsgründen benutzten Begriffe keinerlei Einschränkungen in Bezug auf eine andere Orientierung der damit bezeichneten Komponenten darstellen.

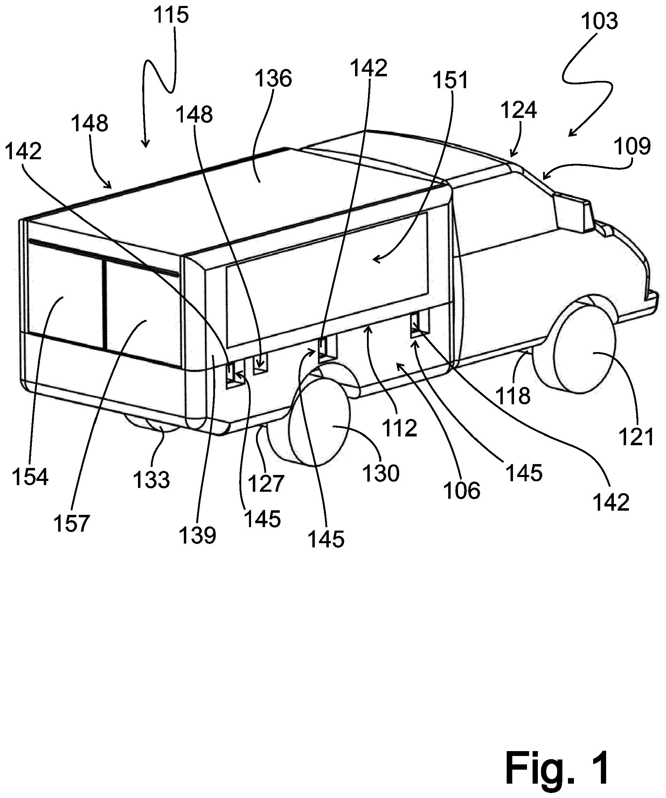

Fig. 1 zeigt in einer perspektivischen Ansicht ein Ausführungsbeispiel der Erfindung mit einem beispielhaften Fahrzeug, das als Kraftfahrzeug 103 ausgebildet ist. Das Kraftfahrzeug 103 verfügt über eine Karosserie 106 mit einem Führerhaus 109 und mit einer Aufsetzfläche 112, die sich in Bezug auf eine Fahrtrichtung nach vorne hinter dem Führerhaus 109 befindet und auf der eine beispielhaft als Wohnkabine 115 ausgestaltete Baukonstruktion gemäß der Erfindung angeordnet sowie befestigt ist. Zum Betrieb des Fahrzeugs als Kraftfahrzeug 103 sind an der Karosserie 106 eine im Bereich des Führerhauses 109 angeordnete Vorderachse 118 mit einem in Bezug auf eine Fahrtrichtung des Kraftfahrzeugs 103 nach vorne rechten Vorderrad 121 sowie mit einem in der Ansicht gemäß Fig. 1 nicht sichtbaren linken Vorderrad und eine im von dem Führerhaus 109 abgewandten, in Bezug auf eine Fahrtrichtung nach vorne hinten liegenden Bereich der Karosserie 106 angeordnete Hinterachse 127 in Bezug auf eine Fahrtrichtung des Kraftfahrzeugs 103 nach vorne mit einem rechten Hinterrad 130 sowie mit einem linken Hinterrad 133 angebracht.

Die Wohnkabine 115 verfügt über ein in der Darstellung gemäß Fig. 1 nicht sichtbares Zentralfestsegment, das mit der Karosserie 106 verbunden ist, über eine Anzahl von in der Darstellung gemäß Fig. 1 nicht sichtbaren, verschiebbar gelagerten und mit dem Zentralfestsegment beziehungsweise miteinander in Eingriff stehenden Schiebesegmente einer zum Verschieben in einer Querrichtung als Expansionsrichtung in der Ebene, in der der das Zentralfestsegment angeordnet ist, ausgebildeten ersten Gruppe, im weiteren anschaulich auch als Horizontalschiebesegmente bezeichnet, über eine Anzahl von Schiebesegmenten 136 einer zum Verschieben in einer Hochrichtung als Zusatzrichtung, die zu der Expansionsrichtung rechtwinklig ist, ausgebildeten zweiten Gruppe, im weiteren anschaulich auch als Vertikalschiebesegmente 136 bezeichnet, und über eine Anzahl von in der Expansionsrichtung sowie in der Erweiterungsrichtung verschiebbar gelagerten sowie jeweils mit einem Vertikalschiebesegment 136 der zweiten Gruppe in Eingriff stehenden Schiebesegmente 139 einer dritten Gruppe, im weiteren anschaulich auch als Doppelschiebesegmente 139 bezeichnet, wobei bei diesem Ausführungsbeispiel die Horizontalschiebesegmente und die Doppelschiebesegmente 139 in Querrichtung beidseitig des Zentralfestsegments beziehungsweise der Vertikalschiebesegmente 136 angeordnet sind.

In der Anordnung gemäß Fig. 1 sind die Schiebesegmente 136, 139 der drei Gruppen in einer Kompaktstellung unter Einnehmen eines Minimalvolumens vollständig ineinandergeschoben dargestellt, so dass von den Doppelschiebesegmenten 139 nur die beiden in der betriebsüblichen Anordnung gemäß Fig. 1 seitlich der Vertikalschiebesegmente 136 außen liegenden äußeren Doppelsegmente 139 und von den Vertikalschiebesegmenten 136 nur das äußere Vertikalschiebesegment 136 sichtbar sind.

In der Kompaktstellung weist bei diesem Ausführungsbeispiel die Wohnkabine 115 eine quaderförmige Gestalt auf, wobei die Längsrichtung der Wohnkabine 115 in Fahrtrichtung des Kraftfahrzeugs 103 ausgerichtet ist, die Seitenwände der äußeren Doppelschiebesegmente 139 jeweils im Wesentlichen bündig seitlich mit dem Führerhaus 109 und die im betriebstypischer Anordnung oben liegende Deckseite des äußeren Vertikalschiebesegments 136 mit dem Dach des Führerhauses 109 abschließen.

Die Wohnkabine 115 ist bei dem Ausführungsbeispiel gemäß Fig. 1 unter anderem über Trägerholme 142, die in in der Karosserie 106 des Kraftfahrzeugs 103 ausgebildeten Trägerholmaufnahmen 145 angeordnet sind, mit der Karosserie 106 des Kraftfahrzeugs 103 verbunden. Weiterhin ist in der Karosserie 106 des Kraftfahrzeugs 103 wenigstens eine Leitungsaufnahme 148 ausgebildet, die zum Aufnehmen von wenigstens einer beispielsweise nach Art einer Schleppkette ausgebildeten, in Fig. 1 nicht sichtbaren flexiblen Versorgungsleitung für beispielsweise Strom, Wasser und/oder Gas sowie zu der Wohnkabine 115 sowie gegebenenfalls auch zum Entsorgen von Abwässern aus der Wohnkabine 115 vorgesehen ist.

Weiterhin lässt sich der Darstellung gemäß Fig. 1 entnehmen, dass bei diesem Ausführungsbeispiel wenigstens die äußeren Doppelschiebesegmente 139 mit lichtdurchlässigen Fenstern 151 ausgestattet sind. Die Vertikalschiebesegmente 136 sind auf der in der Anordnung gemäß Fig. 1 dem Führerhaus 109 abgewandten Rückseite der Wohnkabine 115 als Türflügel mit in Bezug auf die Fahrtrichtung linken Schiebetürflügeln 154 und rechten Schiebetürflügeln 157 ausgebildet. Die Schiebetürflügel 154, 157 sind rechtwinklig zur Längsrichtung der Wohnkabine 115 verschiebbar gelagert.

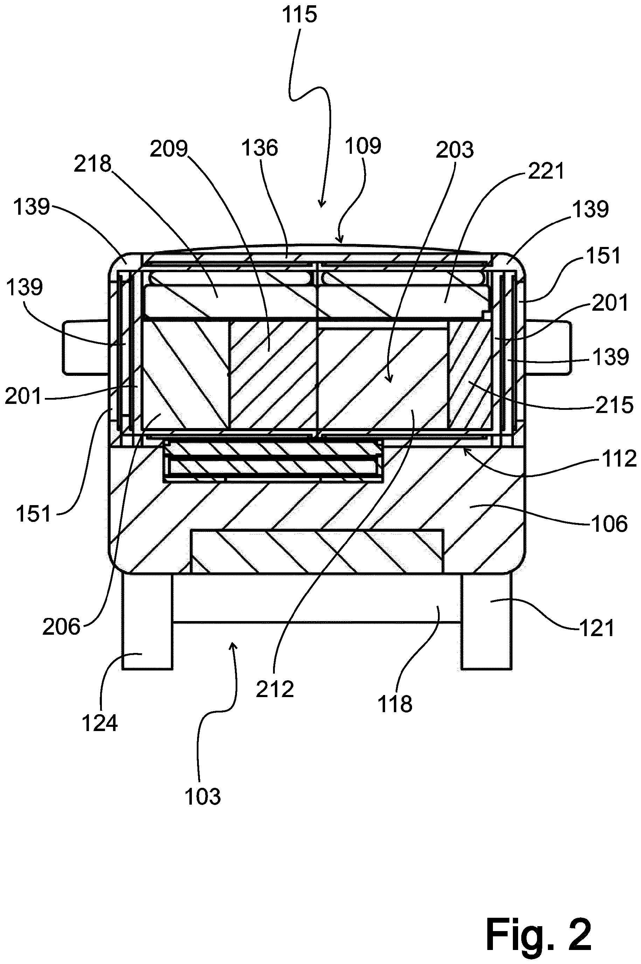

Fig. 2 zeigt in einer Schnittansicht durch das Fahrzeug 103 und die Wohnkabine 115 das Ausführungsbeispiel gemäß Fig. 1 mit den Schiebesegmenten 136, 139 der drei Gruppen in der Kompaktstellung, wobei die Schnittebene quer zur Längsrichtung der Wohnkabine 115 und auf der dem Führerhaus 109 abgewandten Seite der Hinterachse 127 des Kraftfahrzeugs 103 liegt. Dadurch lässt sich der Darstellung gemäß Fig. 2 entnehmen, dass die Seitenwände der in der Darstellung nunmehr sichtbaren innen liegenden Horizontalschiebesegmente 201 und der Doppelschiebesegmente 139 im Sinne von im Wesentlichen spaltfrei eng benachbart zueinander außenseitig angeordnet sind und ein Innenraum 203 der Wohnkabine 115 frei von Wänden der Schiebesegmente 136, 139, 201 der drei Gruppen ist.

Weiterhin lässt sich der Darstellung gemäß Fig. 2 entnehmen, dass in dem von den Schiebesegmenten 136, 139, 201 der drei Gruppen umschlossenen Innenraum 203 der Wohnkabine 115 als Gerätschaften eine Anzahl von Einbauelementen in Gestalt von beispielsweise einem außenseitigen Verstauschrank 206, einem innenseitigen Verstauschrank 209 einem unteren Küchenschrank 212 und einem oberen Küchenschrank 215, die in Querrichtung der Wohnkabine 115 dicht benachbart bis aneinander anliegend angeordnet sind, und auf der der Aufsetzfläche 112 abgewandten Seite dieser Einbauelemente als weitere Einbauelemente eine in Bezug auf eine Fahrtrichtung nach vorne linke Bettstatt 218 und rechte Bettstatt 221 vorhanden sind.

In der Kompaktstellung gemäß Fig. 1 und Fig. 2 sind die linke Bettstatt 218 und die rechte Bettstatt 221 in Querrichtung der Wohnkabine 115 dicht beieinander und in Hochrichtung der Wohnkabine 115 zwischen der dem Innenraum 203 zugewandten Seite des äußeren Vertikalschiebesegments 136 und den Verstauschränken 206, 209 sowie Küchenschränken 212, 215 angeordnet, so dass in der Kompaktstellung der Innenraum 203 in diesem Bereich im Wesentlichen vollständig mit Einbauelementen ausgefüllt und damit hohlraumfrei ist.

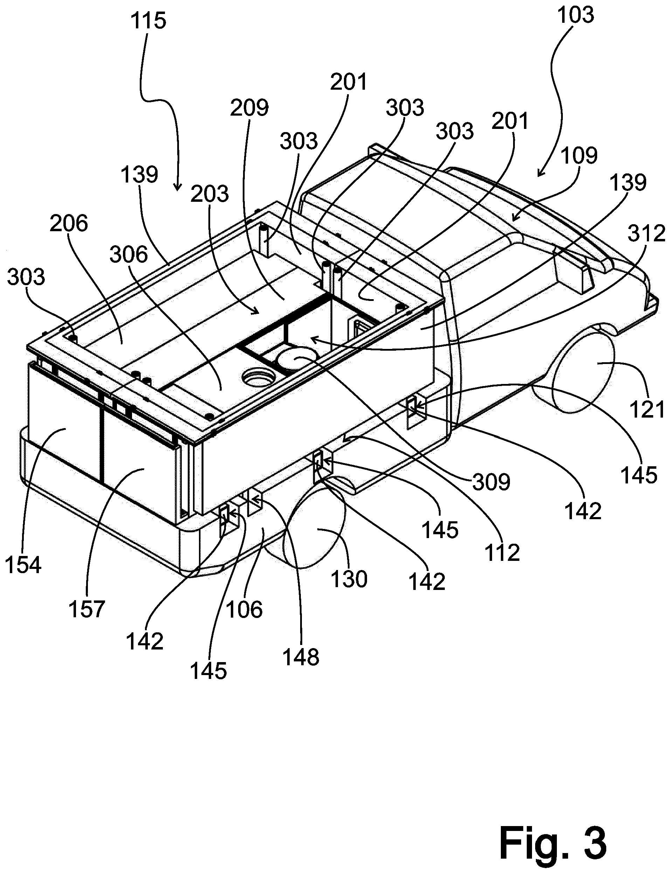

Fig. 3 zeigt in einer perspektivischen Ansicht das Ausführungsbeispiel gemäß Fig. 1 mit abgenommenen äußeren Schiebesegmenten 136, 139 der zweiten Gruppe sowie der dritten Gruppe, mit entfernten Bettstätten 218, 221 und mit den verbleibenden Schiebesegmenten 139, 201 in der Kompaktstellung mit Blick in den Innenraum 203. Aus Fig. 3 ist insbesondere ersichtlich, dass die Wohnkabine 115 über eine Anzahl von in Hochrichtung arbeitenden Teleskopspindeln 303 verfügt, die in den innenseitigen Eckbereichen der Wohnkabine 115 und in den aufeinander zugewandten Stoßbereichen der innenseitigen Querwände der Horizontalschiebesegmente 201 und der in der Darstellung gemäß Fig. 3 abgenommenen äußeren Doppelschiebesegmente 139 angeordnet sind. Die Teleskopspindeln 303 stehen wirkmäßig zum einen mit den Horizontalschiebesegmenten 201 als Widerlager in Verbindung und sind zum anderen mit den äußeren Doppelschiebesegmenten 136 verbunden.

Weiterhin lässt sich der Darstellung gemäß Fig. 3 entnehmen, dass als Einbauelemente neben den Küchenschränken 212, 215 als Bestandteile einer Küchenzelle 306 auch eine Toiletteneinheit 309 als weiteres Einbauelement einer auf der dem Führerhaus 109 zugewandten Seite der Wohnkabine 115 angeordneten Sanitärzelle 312 vorhanden sind.

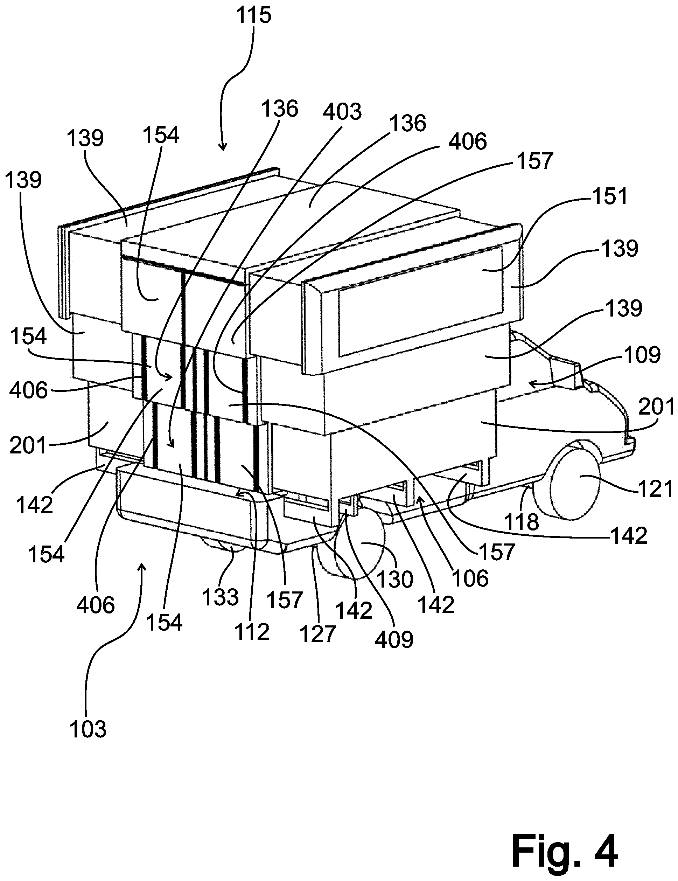

Fig. 4 zeigt die beispielhafte, voranstehend erläuterte Wohnkabine 115 in einer Expansionsstellung, zu deren Einnehmen zum bedarfsweisen Bereitstellen eines Nutzraums ausgehend von der in Fig. 1 bis Fig. 3 dargestellten Kompaktstellung die Doppelschiebesegmente 139 mittels der in Hochrichtung als Erweiterungsrichtung wirkenden Teleskopspindeln 303 unter Mitnahme der Vertikalschiebesegmente 136 und vorzugsweise anschließend die Horizontalschiebesegmente 201 oder die oberen Doppelschiebesegmente 139 beispielsweise mit in zu der Hochrichtung rechtwinkligen Querrichtung als einer Expansionsrichtung wirkenden, nicht dargestellten Zahnstangenantrieben unter Mitnahme der nicht angetriebenen Horizontalschiebesegmente 201 beziehungsweise Doppelschiebesegmente 139 verschoben worden sind.

Der Darstellung gemäß Fig. 4 lässt sich entnehmen, dass die Wohnkabine 115 neben den verschiebbaren Schiebesegmenten 136, 139, 201 der drei Gruppen das in der Darstellung gemäß Fig. 4 nunmehr sichtbare Zentralfestsegment 403 aufweist, das fest mit der Karosserie 106 des Kraftfahrzeugs 103 verbunden und auf der Aufsetzfläche 112 angeordnet ist. Innenseitig der Querwände des Zentralfestsegments 403 sind Querwände von Horizontalschiebesegmenten 201 angeordnet, die sowohl in der Kompaktstellung als auch in der Expansionsstellung in der Ebene des Zentralfestsegments 403 als unterer Ebene verbleiben.

In einer von der unteren Ebene, in der das Zentralfestsegment 403 und die beiden vorgenannten Horizontalschiebesegmente 201 angeordnet sind, in Hochrichtung beabstandeten weiteren zweiten und bei diesem Ausführungsbeispiel mittleren Ebene sind in der Expansionsstellung ein unteres Vertikalschiebesegment 136 sowie in Querrichtung außenseitig beidseitig des unteren Vertikalschiebesegments 136 zwei untere Doppelschiebesegmente 139 angeordnet. In einer auf der von der unteren Ebene abgewandten Seite der mittleren Ebene liegenden dritten und bei diesem Ausführungsbeispiel oberen Ebene sind in der Expansionsstellung ein in der Anordnung gemäß Fig. 4 oben liegendes äußeres Vertikalschiebesegment 136 sowie in Querrichtung beidseitig des äußeren Vertikalschiebesegments 136 zwei in der Anordnung gemäß Fig. 4 seitlich außen liegende äußere Doppelschiebesegmente 139 angeordnet.

Wie aus der Darstellung gemäß Fig. 4 ersichtlich ist, steht bevorzugt jedes Vertikalschiebesegment 136 der zweiten Gruppe mit genau einem Vertikalschiebesegment 136 der zweiten Gruppe und mit wenigstens einem, bei dem dargestellten Ausführungsbeispiel mit zwei, Doppelschiebesegmenten 139 der dritten Gruppe in Eingriff. Jedes Doppelschiebesegment 139 der dritten Gruppe steht mit genau einem Doppelschiebesegment 139 der dritten Gruppe und mit genau einem Vertikalschiebesegment 136 der zweiten Gruppe in Eingriff. Die Horizontalschiebesegmente 201 stehen jeweils mit dem Zentralfestsegment 403 und mit einem inneren Doppelschiebesegment 139 der dritten Gruppe in Eingriff.

Bei den Schiebesegmenten 136 der zweiten Gruppe ist der Eingriff des äußeren Schiebesegments 136 der zweiten Gruppe mit dem unteren Schiebesegment 136 der zweiten Gruppe derart eingerichtet, dass bei einem Bewegen des äußeren Schiebesegments 136 der zweiten Gruppe von dem Zentralfestsegment 403 weg das untere Schiebesegment 136 der zweiten Gruppe passiv mitgenommen wird.

Bei den Schiebesegmenten 139, 201 der ersten Gruppe und der dritten Gruppe ist der wechselseitige Eingriff derart eingerichtet, dass bei einem Verschieben der Horizontalschiebesegmente 201 der ersten Gruppe oder der oberen Doppelschiebesegmente 139 der dritten Gruppe in der Querrichtung als einer Expansionsrichtung die anderen Schiebesegmente 139, 201 der ersten beziehungsweise der dritten Gruppe mitgenommen werden.

Durch dieses Zusammenwirken beispielsweise durch ein randseitiges Überkragen ist beim Überführen der Wohnkabine 115 von der beispielsweise in Fig. 1 dargestellten Kompaktstellung in die in Fig. 4 dargestellte Expansionsstellung eine wechselseitige Mitnahme von nicht aktiv angetriebenen Schiebesegmenten 136, 139, 201 gewährleistet.

Weiterhin lässt sich der Darstellung gemäß Fig. 4 entnehmen, dass jedes Vertikalschiebesegment 136, also jedes Schiebesegment 136 der zweiten Gruppe, über in Bezug auf eine Fahrtrichtung nach vorne einen linken Schiebetürflügel 154 und über einen rechten Schiebetürflügel 157 verfügt, die jeweils in Querrichtung nach außen in eine Offenstellung und zurück in eine Schließstellung, die in Fig. 4 dargestellt ist, verschiebbar sind. Die Schiebetürflügel 154, 157 fluchten mit den linken Schiebetürflügeln 154 beziehungsweise mit den rechten Schiebetürflügeln 157 der jeweils anderen Vertikalschiebesegmente 136 in der Offenstellung beziehungsweise in der Schließstellung als Endstellungen. Zweckmäßigerweise sind in den Endstellungen miteinander fluchtende Schiebetürflügel 154, 157 derart miteinander gekoppelt, dass bei einem Bewegen eines Schiebetürflügels 154, 157 die beiden anderen mit ihm gekoppelten Schiebetürflügel 154, 157 mitbewegt werden.

Weiterhin lässt sich der Darstellung gemäß Fig. 4 entnehmen, dass die Trägerholme 142 mit ihren außenseitigen Enden mit den Außenseiten der Horizontalschiebesegmente 201 verbunden sind und in mit der Karosserie 106 verbundenen Trägerholmführungen eingreifen. Dadurch werden die Horizontalschiebesegmente 201 und mit ihnen unter Mitnahme die Doppelschiebesegmente 139 in Querrichtung stabil und belastbar geführt.

Zum Abstützen besonders hoher Lasten sind in Fig. 4 nicht dargestellte zusätzliche ausziehbare Bodenstützen vorgesehen, die bei Bedarf zwischen dem Boden und den dem Boden zugewandten Unterseiten der Horizontalschiebesegmente 201 angeordnet sind.

Schließlich sind in Fig. 4 schematisch an dem Zentralfestsegment 403 und an den Vertikalschiebesegmenten 136 angebrachte Vertikalführungen 406, die zum leichten und insbesondere verkantungsfreien Verschieben der Vertikalschiebesegmente 136 dienen, und eine Versorgungsleitung 409 dargestellt, die an die Sanitärzelle 312 und in der Karosserie 106 verbaute Versorgungsbehälter und Entsorgungsbehälter angeschlossen ist.

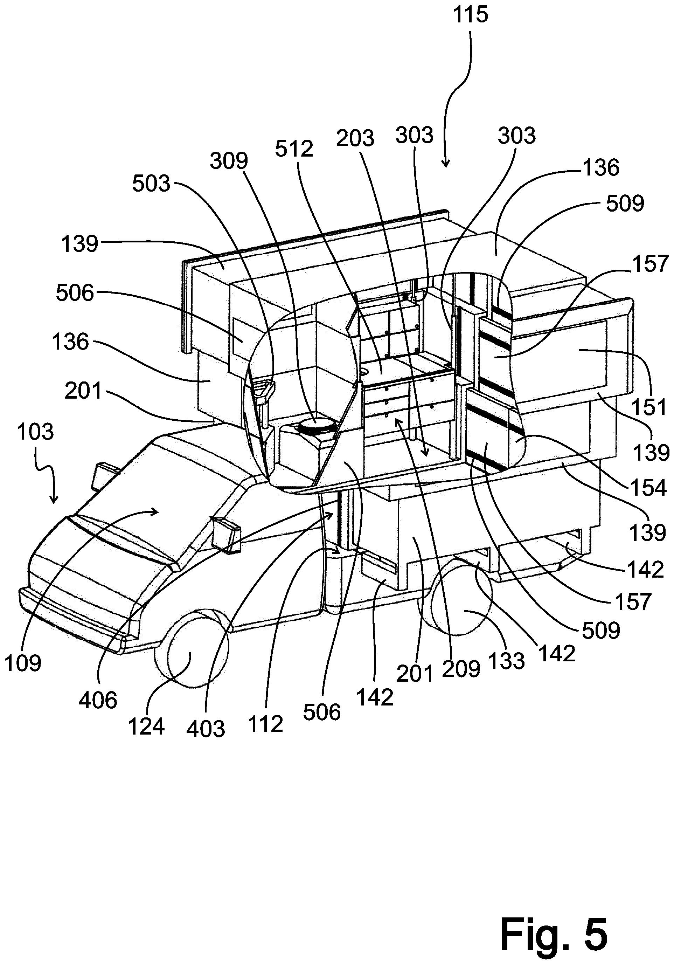

Fig. 5 zeigt in einer perspektivischen Ansicht das Ausführungsbeispiel gemäß Fig. 1 mit den Schiebesegmenten 136, 139, 201 in der Expansionsstellung gemäß Fig. 4 mit in einem ersten Bereich aufgerissenen Seitenwänden und Deckwänden von Schiebesegmenten 136, 139 mit Blick in den gegenüber der Kompaktstellung gemäß Fig. 3 nunmehr um einen Nutzraum vergrößerten Innenraum 203 im Bereich der Küchenzelle 306 und der neben der Toilette 309 weiterhin mit einem versenkbaren Waschbecken 503 sowie mit einer Badtrennwand 506 zum Abgrenzen eines Duschbereichs ausgestatteten Sanitärzelle 312. Aus Fig. 5 ist deutlich ersichtlich, dass der um den Nutzraum vergrößerte und durch die in der zweiten Richtung ausgefahrenen Teleskopspindeln 303 in Hochrichtung abgestützte Innenraum 203 der Wohnkabine 115 nunmehr für Nutzer begehbar und damit als Wohnraum nutzbar ist.

Die den Schiebetürflügeln 154, 157 gegenüberliegende Seitenwand des oberen Vertikalschiebesegments 136 und vorzugsweise auch des unteren Vertikalschiebesegments 136 ist beziehungsweise sind zweckmäßigerweise jeweils mit einem lichtdurchlässigen Fenster 506 ausgestattet, um Lichteinfall in den Innenraum 203 zu gestatten.

Weiterhin lässt sich der Darstellung gemäß Fig. 5 entnehmen, dass die Schiebesegmente 136, 139, 201 mit Horizontalführungen 509 ausgestattet sind, um ein möglichst wenig kräfteraubendes Verschieben der Schiebesegmente 136, 139, 201 in der Querrichtung als Expansionsrichtung zu gestatten. In nutzungspraktischer Hinsicht ist vorteilhaft, dass nach Ausschieben der rechten Doppelschiebesegmente 139 auf den innenseitigen Verstauschränken 209 eine Ablagefläche 512 geschaffen ist.

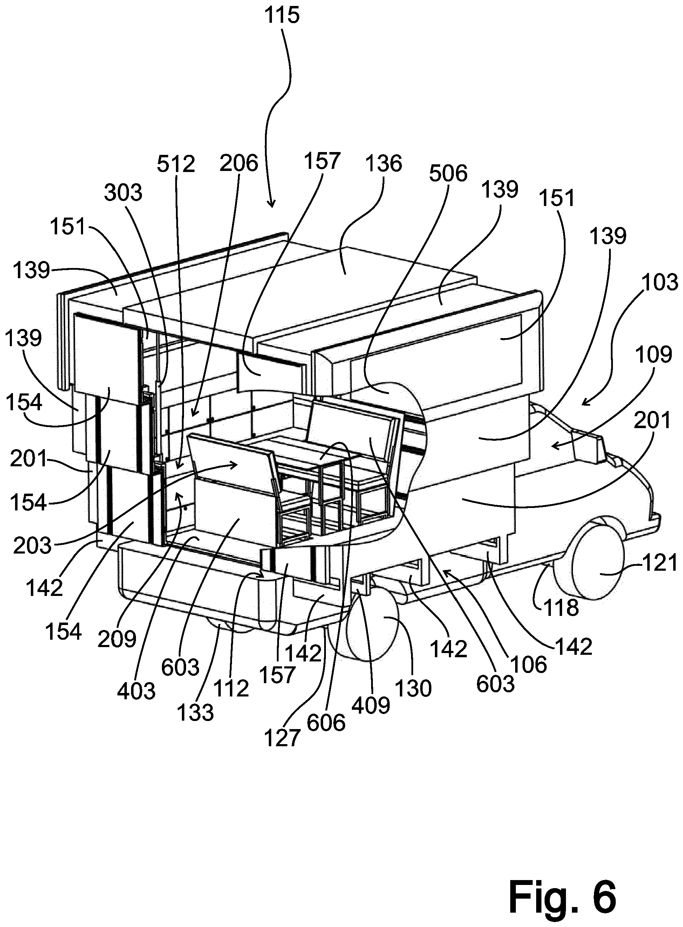

Fig. 6 zeigt in einer perspektivischen Ansicht das Ausführungsbeispiel gemäß Fig. 1 in der Anordnung gemäß Fig. 5 bei offenstehenden Schiebetürflügeln 154, 157 mit in einem zweiten Bereich aufgerissenen Seitenwänden von Schiebesegmenten 136, 139, 201 mit Blick in den gegenüber der Anordnung gemäß Fig. 3 nunmehr um den Nutzraum vergrößerten Innenraum 203 im Bereich der Verstauschränke 206, 209 und von Sitzbänken 603 sowie einem zwischen den Sitzbänken 603 angeordneten Tisch 606 als weiteren Einbauelementen in Gestalt einer Sitzgruppe. Die Sitzbänke 603 und der Tisch 606 sind vorzugsweise zusammenklappbar und in einen Zwischenboden des Zentralfestsegments 403 versenkbar ausgestaltet, um diese bei Nichtnutzung aus dem Innenraum 203 und zum Überführen der Wohnkabine 115 in die Kompaktstellung aus dem Innenraum 203 entfernen zu können.

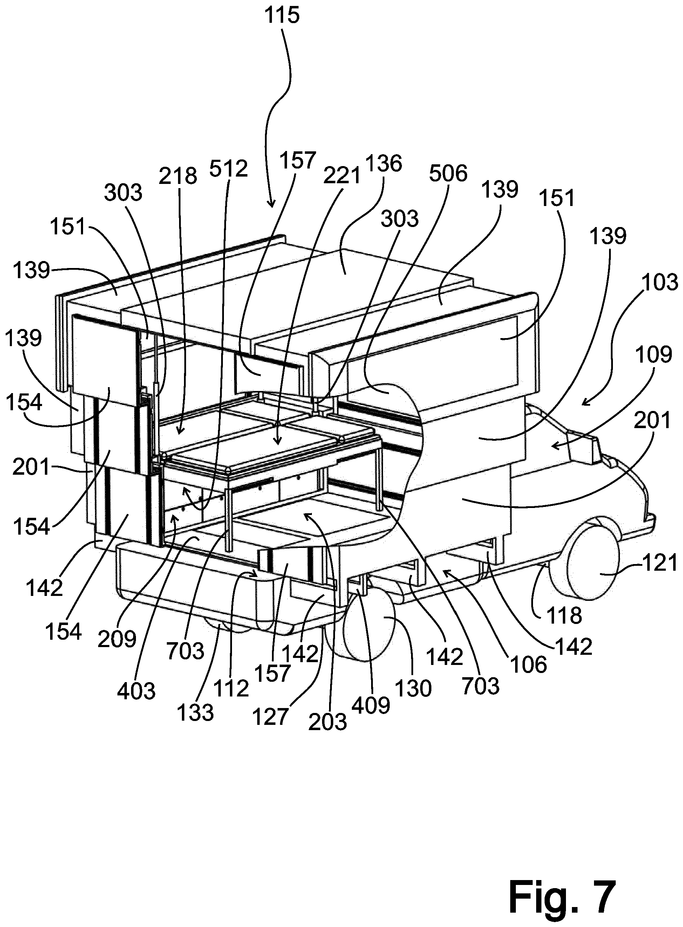

Fig. 7 zeigt in einer perspektivischen Ansicht das Ausführungsbeispiel gemäß Fig. 1 in der Anordnung gemäß Fig. 5 mit in dem zweiten Bereich aufgerissenen Seitenwänden von Schiebesegmenten 136, 139, 201 mit Blick in den nach Versenken der Sitzbänke 603 und des Tisches 606 nunmehr mit den beiden Bettstätten 218, 221 als Schlafelemente ausgestatteten Innenraum 203. Die Bettstätten 218, 221 sind zum Einnehmen der Anordnung gemäß Fig. 7 von der Decke des linken oberen Doppelschiebesegments 139 herabgelassen. Die rechte und nunmehr im Innenraum 203 innenseitige Bettstatt 221 wird aufgrund schwenkbarer Lagerung einklappbarer und ausklappbarer Bettfüße 703 mit den Bettfüßen 703 in der ausgeklappten Stellung gehalten, während die linke Bettstatt 218 auf der auf den innenseitigen Verstauschränken 209 ausgebildeten Ablagefläche 512 aufliegt.

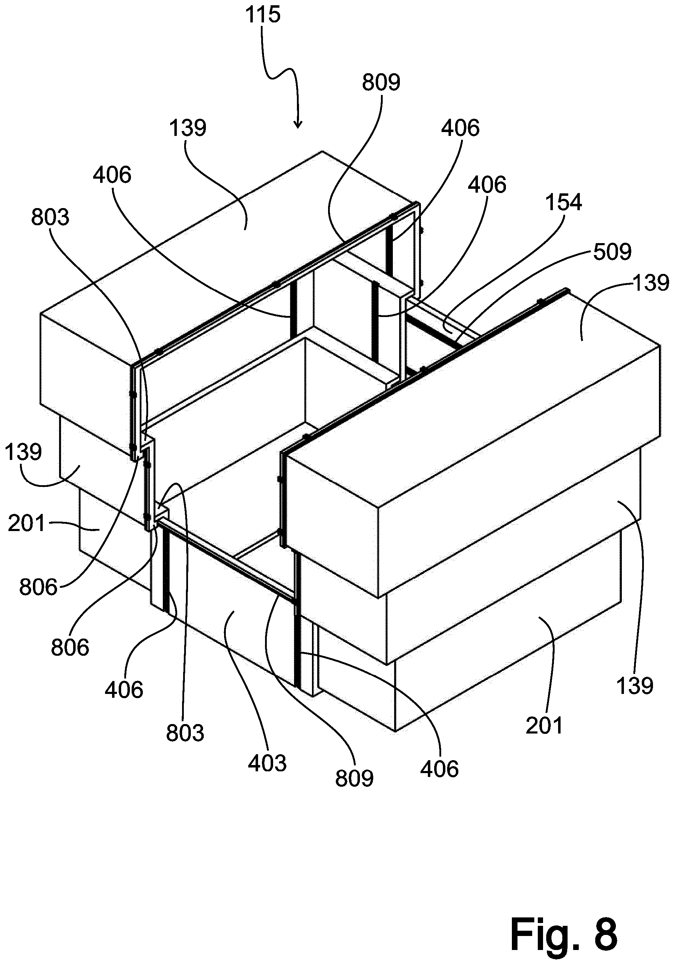

Fig. 8 zeigt in einer perspektivischen Ansicht die Baukonstruktion in Gestalt der Wohnkabine 115 des Ausführungsbeispiels gemäß Fig. 1 ohne Gerätschaften mit entfernten Schiebesegmenten 136 der zweiten Gruppe.

Aus Fig. 8 ist ersichtlich, dass die unteren Doppelschiebesegmente 139, wie im Übrigen auch das in Fig. 8 nicht dargestellte untere Vertikalschiebesegment 136, jeweils mit einem oberen, von dem Innenraum 203 wegweisend auskragenden Rand 803 und mit einem unteren, dem Innenraum 203 zugewandten einkragenden Rand 806 ausgebildet sind, die mit komplementär ausgebildeten auskragenden Rändern 803 beziehungsweise einkragenden Rändern 806 der unteren Doppelschiebesegmente 139 und der oberen Doppelschiebesegmente 139 beziehungsweise mit dem unteren Vertikalschiebesegment 136 in Eingriff bringbar sind, so dass bei Verschieben der äußeren Doppelschiebesegmente 139 in Hochrichtung durch passive Mitnahme sowohl ein Verschieben der unteren Doppelschiebesegmente 139 als auch ein Verschieben der Vertikalschiebesegmente 136 jeweils ebenfalls in Hochrichtung erfolgt.

Das Einnehmen der Expansionsstellung erfolgt weiterhin dadurch, dass beispielsweise die Horizontalschiebesegmente 201 über die nicht dargestellten Zahnstangenantriebe aktiv in Querrichtung verschoben und die Doppelschiebesegmente 139 passiv mitgenommen werden.

Weiterhin lässt sich Fig. 8 entnehmen, dass entlang den Rändern der Schiebesegmente 136, 139, 201 der drei Gruppen und auch des Zentralfestsegments 403 Dichtlippen 809 angeordnet sind, die vorzugsweise derart angeordnet sind, dass an jeder Stelle entlang der Ränder der Schiebesegmente 136, 139, 201 der drei Gruppen als auch des Zentralfestsegments 403 in der Expansionsstellung jeweils Dichtlippen 809 benachbarter Schiebesegmente 136, 139, 201 aneinander anliegen, um somit eine Dichtheit der Wohnkabine 115 insbesondere gegen Wasser, aber auch gegen Zugluft in der Expansionsstellung sicherzustellen.

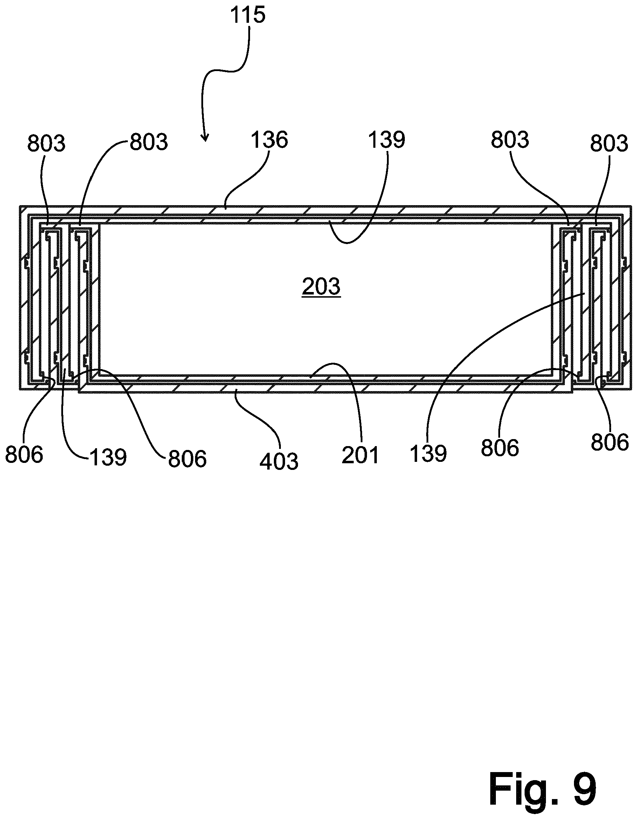

Fig. 9 zeigt in einer Schnittansicht in der Querrichtung die Baukonstruktion des Ausführungsbeispiels gemäß Fig. 1 in Gestalt der Wohnkabine 115 ohne Einbauelemente mit den Schiebesegmenten 136, 139, 201 der drei Gruppen erneut in der Kompaktstellung, in der die sich in Längsrichtung erstreckenden Seitenwände der Schiebesegmente 136, 139, 201 und des Zentralfestsegments 403 randseitig dicht nebeneinander angeordnet liegen. Aus Fig. 9 ist ersichtlich, dass die gegenüber den einkragenden Rändern 806 länger ausgebildeten auskragenden Ränder 803 an der Seitenwand des benachbarten Schiebesegments 136, 139 anliegen und bei Verschieben dieser benachbarten Schiebesegmente 136, 139 in Hochrichtung die einkragenden Ränder 806 an den auskragenden Rändern 803 anschlagen, so dass der Eingriff fertiggestellt und die passive Mitnahme bewirkt ist.

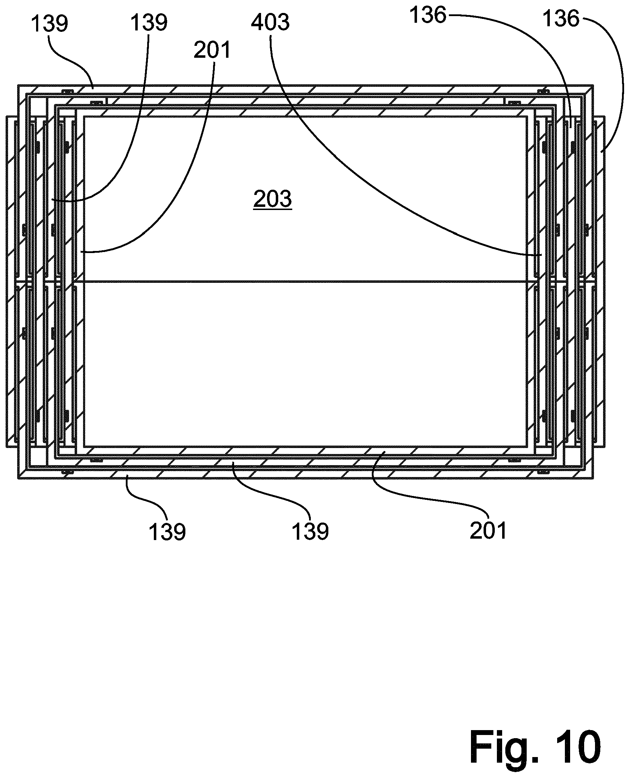

Fig. 10 zeigt in einer Schnittansicht in einer in der Ebene des Zentralfestsegments 403 liegenden Schnittebene die Baukonstruktion des Ausführungsbeispiels gemäß Fig. 1 in Gestalt der Wohnkabine 115 in der Anordnung gemäß Fig. 9. Aus Fig. 10 ist ersichtlich, dass auch die sich in Querrichtung erstreckenden Seitenwände der Schiebesegmente 136, 139, 201 und des Zentralfestsegments 403 randseitig dicht nebeneinander angeordnet liegen.

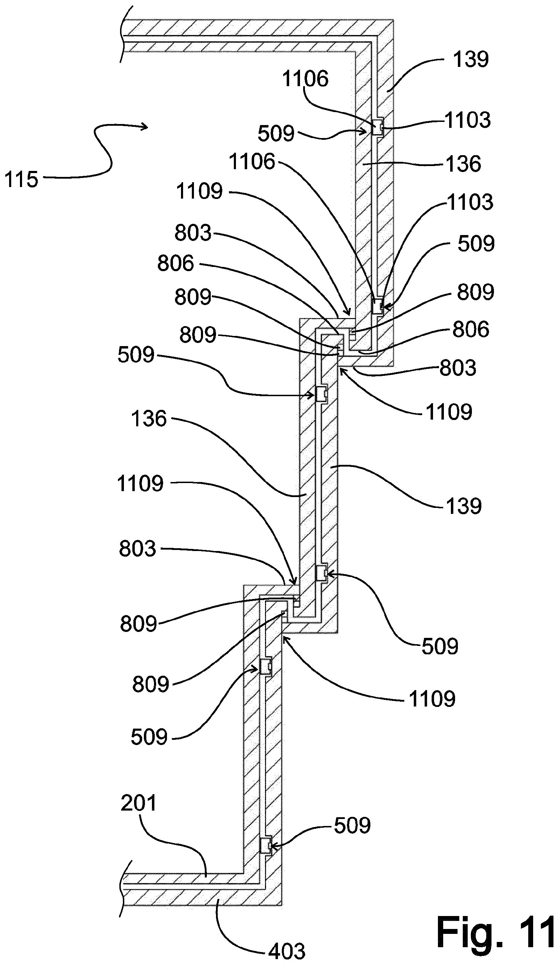

Fig. 11 zeigt in einer Schnittansicht in einer Längsrichtung einen Wandbereich von Schiebesegmenten 136, 139, 201 und des Zentralfestsegments 403 der Baukonstruktion des Ausführungsbeispiels gemäß Fig. 1 in Gestalt der Wohnkabine 115 in der Expansionsstellung. Aus Fig. 11 ist ersichtlich, dass zwischen den Seitenwänden der Schiebesegmente 136, 139, 201 und des Zentralfestsegments 403 vorzugsweise jeweils Paare von Horizontalführungen 509 vorhanden sind, die jeweils mit einer Horizontalführungsschiene 1103 und mit einem mit der betreffenden Horizontalführungsschiene 1103 in Eingriff stehenden Horizontalführungswagen 1106 ausgebildet sind. Dadurch sind die Schiebesegmente 136, 139, 201 untereinander und gegenüber dem Zentralfestsegment 403 mit einem verhältnismäßig geringen Abstand der Seitenwände voneinander mit wenig Reibungsverlust geführt.

Weiterhin lässt sich der Darstellung gemäß Fig. 11 entnehmen, dass in der Expansionsstellung die einkragenden Ränder 803 und die auskragenden Ränder 806, jeweils mit zwischenliegenden Dichtlippen 809, an umlaufenden Anlagebereichen 1109, sozusagen allumfassenden Verbindungsstellen, paarweise aneinander anliegen. Dadurch ist eine sehr hohe Stabilität und eine gute Abdichtung der Baukonstruktion gewährleistet.

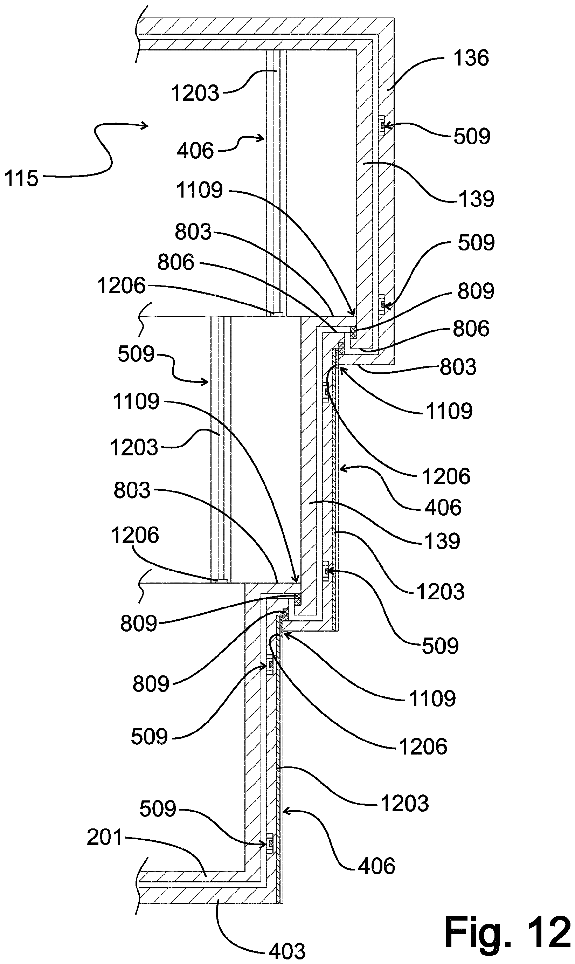

Fig. 12 zeigt in einer Schnittansicht entsprechend Fig. 11 in einer weiteren Schnittebene die Baukonstruktion des Ausführungsbeispiels gemäß Fig. 1 in Gestalt der Wohnkabine 115 in der Expansionsstellung. Aus Fig. 12 ist ersichtlich, dass auch die Vertikalführungen 406 jeweils über eine Vertikalführungsschiene 1203 und über einen Vertikalführungswagen 1206 verfügen, die ein Führen der Vertikalschiebesegmente 136 und Doppelschiebesegmente 139 in Hochrichtung als Erweiterungsrichtung sicherstellen.

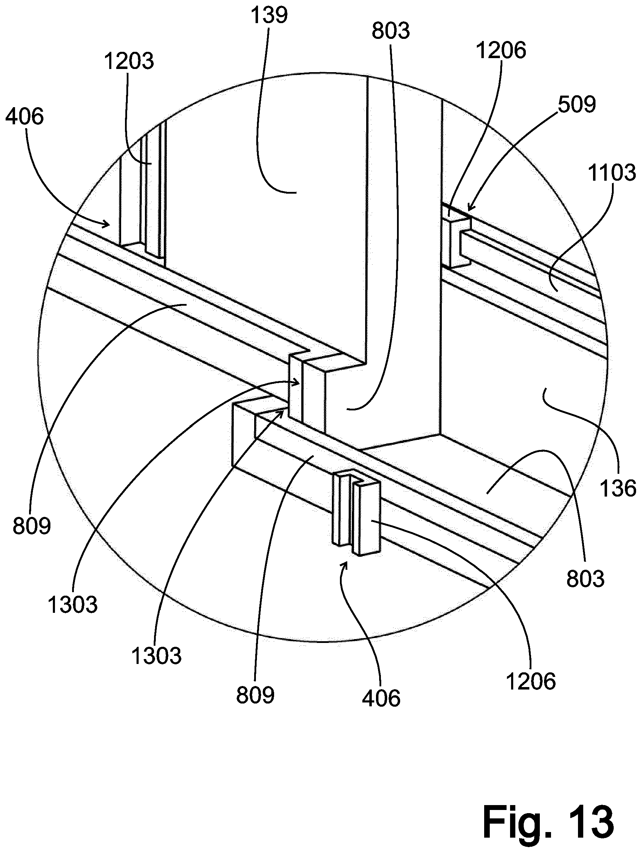

Fig. 13 zeigt in einer perspektivischen Ansicht einen Ausschnitt der beispielhaften Baukonstruktion in Gestalt der Wohnkabine 115 im Stoßbereich von einem Schiebesegment 136 der ersten Gruppe mit einem Schiebesegment 139 der dritten Gruppe. Aus Fig. 13 ist ersichtlich, dass die Dichtlippen 809 der benachbarten Doppelschiebesegmente 139 über abgewinkelte Kontaktabschnitte 1303 verfügen, die in der hier dargestellten Expansionsstellung aneinander anliegen und damit die Dichtheit gewährleisten.

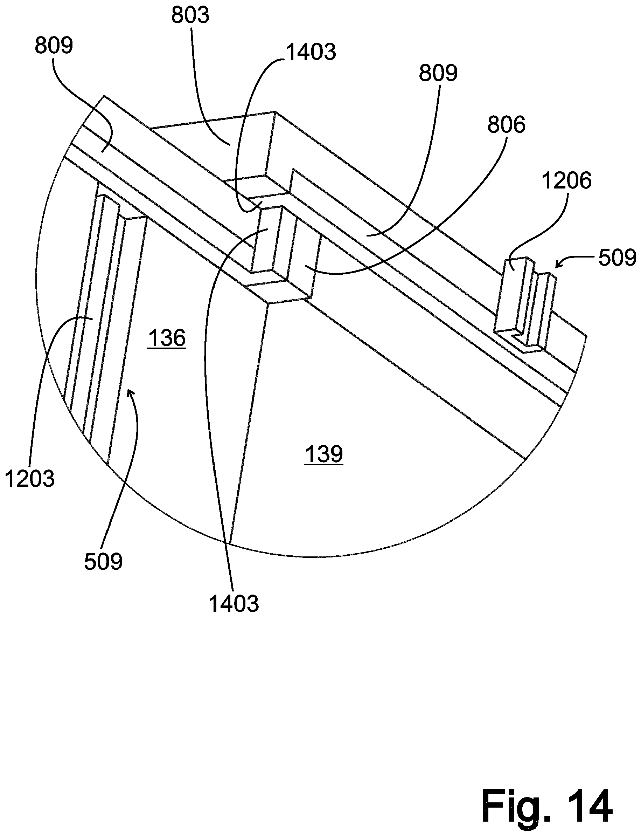

Fig. 14 zeigt in einer perspektivischen Ansicht einen Ausschnitt der beispielhaften Baukonstruktion in Gestalt der Wohnkabine 115 im Stoßbereich von einem Schiebesegment 136 der zweiten Gruppe mit einem Schiebesegment 139 der dritten Gruppe. Auch hier verfügen die Dichtlippen 809 der benachbarten Vertikalschiebesegmente 136 über abgewinkelte Kontaktabschnitte 1403, die in der in Fig. 14 dargestellten Expansionsstellung abdichtend aneinander anliegen.

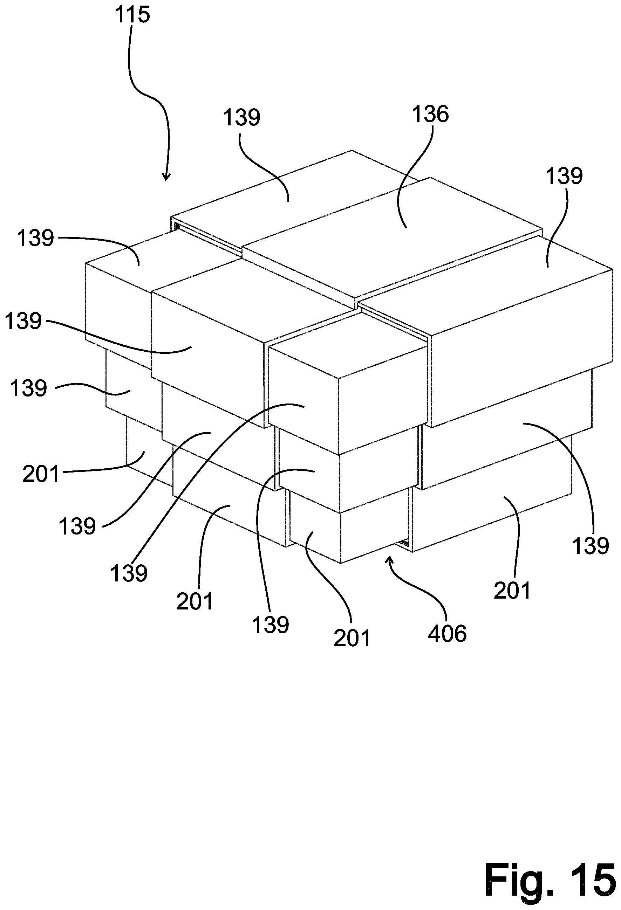

Fig. 15 zeigt in einer perspektivischen Ansicht ein weiteres Ausführungsbeispiel einer als Wohnkabine 115 ausgeführten Baukonstruktion mit in zwei Expansionsrichtungen, nämlich in einer Querrichtung und in einer Längsrichtung, verschiebbaren Schiebesegmenten 136, 139, 201 der ersten Gruppe und der dritten Gruppe in einer Expansionsstellung. Der Darstellung gemäß Fig. 15 lässt sich entnehmen, dass gegenüber dem voranstehend anhand Fig. 1 bis Fig. 14 erläuterten Ausführungsbeispiel weitere Horizontalschiebesegmente 201 der ersten Gruppe und weitere Doppelschiebesegmente 139 der dritten Gruppe vorhanden sind, die in der Längsrichtung verschiebbar sind. Dabei greifen in Eckbereichen angeordnete Schiebesegmente 139, 201 zum einen in in Querrichtung verschiebbare Schiebesegmente 139, 201 und zum anderen in in Längsrichtung verschiebbare Schiebesegmente 139, 201 ein. Die zwischen den Eckbereichen mittig angeordneten Schiebesegmenten 139, 201 wiederum greifen in Vertikalschiebesegmente 136 beziehungsweise in das in Darstellung gemäß Fig. 15 nicht sichtbare Zentralfestsegment 406 ein.

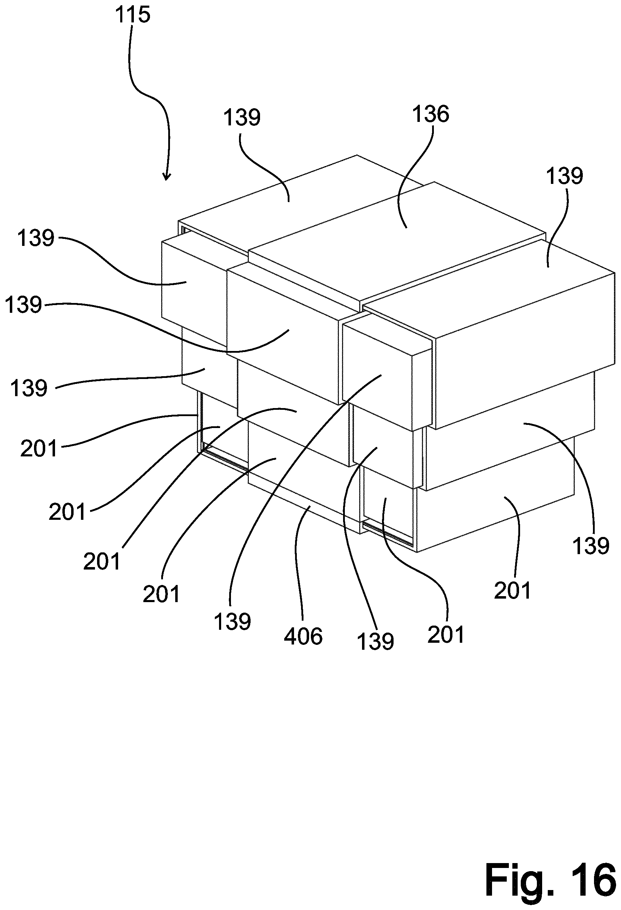

Fig. 16 zeigt in einer perspektivischen Ansicht das Ausführungsbeispiel gemäß Fig. 15 mit den Schiebesegmenten 136, 139, 201 in einer gegenüber der Expansionsstellung den Innenraum 203 verkleinernden ersten Zwischenstellung. In der ersten Zwischenstellung gemäß Fig. 16 sind gegenüber der Expansionsstellung gemäß Fig. 15 die in Längsrichtung verschiebbaren Schiebesegmente 139, 201 eingeschoben.

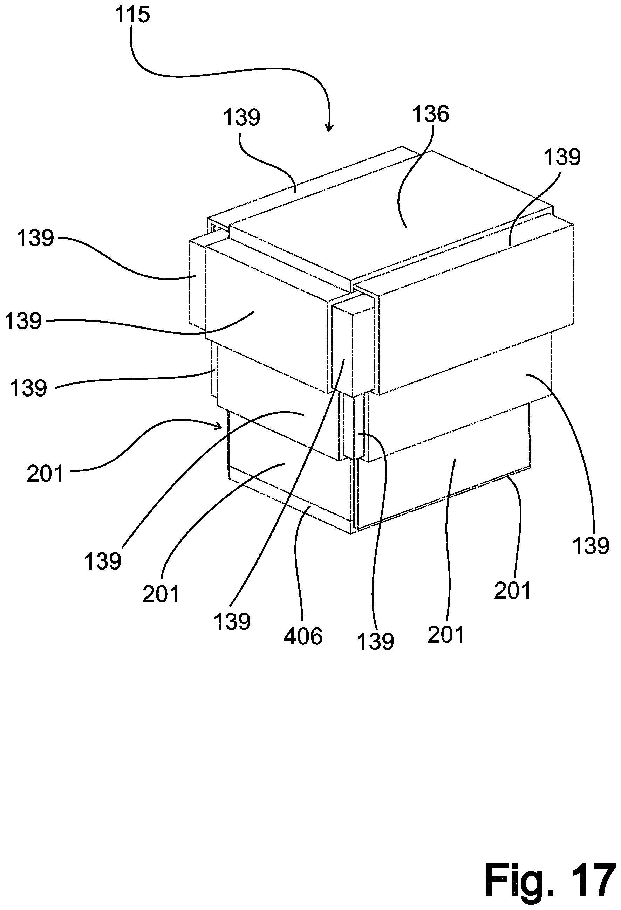

Fig. 17 zeigt in einer perspektivischen Ansicht das Ausführungsbeispiel gemäß Fig. 15 mit den Schiebesegmenten 136, 139, 201 in einer gegenüber der ersten Zwischenstellung gemäß Fig. 16 den Innenraum 203 weiter verkleinernden zweiten Zwischenstellung. In der zweiten Zwischenstellung gemäß Fig. 17 sind gegenüber der ersten Zwischenstellung gemäß Fig. 16 nunmehr die in Querrichtung verschiebbaren Schiebesegmente 139, 201 eingeschoben.

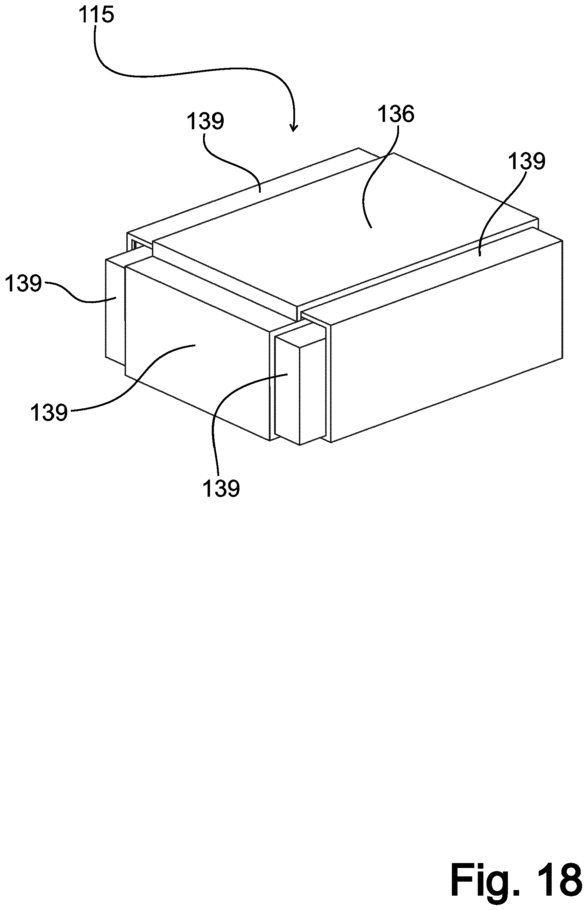

Fig. 18 schließlich zeigt in einer perspektivischen Ansicht das Ausführungsbeispiel gemäß Fig. 15 mit den Schiebesegmenten 136, 139, 201 in einer den Innenraum 203 maximal verkleinernden Kompaktstellung. In der Kompaktstellung gemäß Fig. 18 sind nunmehr auch die in Hochrichtung als Erweiterungsrichtung verschiebbaren Schiebesegmente 136 der zweiten Gruppe eingeschoben.

Die anhand Fig. 15 bis Fig. 18 erläuterte Abfolge des Verschiebens der Schiebesegmente 136, 139, 201 der drei Gruppen zwischen der Expansionsstellung und der Kompaktstellung stellt beispielhaft eine Handhabungsmöglichkeit der Wohnkabine 115 dar.

Das Ausführungsbeispiel gemäß Fig. 15 zeichnet sich bei einer gegenüber dem anhand Fig. 1 bis Fig. 14 erläuterten Ausführungsbeispiel in der Kompaktstellung verhältnismäßig geringfügig höheren Inanspruchnahme des Innenraums 203 durch eine höhere Anzahl von in der Kompaktstellung innenseitig angeordneten Seitenwänden und Deckwänden der Schiebesegmente 136, 139, 201 jedoch durch einen besonders großen Nutzraum aus.

## Patentansprüche

1. Baukonstruktion zum Aufnehmen von wahlweise in einem Innenraum (203) angeordneten Gerätschaften und zum bedarfsweisen Bereitstellen eines den Innenraum (203) erweiternden Nutzraums mit einem Zentralfestsegment (403) und mit einer Anzahl von in Bezug auf das Zentralfestsegment (403) in wenigstens einer Expansionsrichtung in einer Ebene verschiebbar gelagerten Schiebesegmenten (201), die zwischen einer Kompaktstellung mit einem Minimalvolumen und einer Expansionsstellung mit einem Maximalvolumen verschiebbar sind, wobei die Schiebesegmente (136, 139, 201) als wenigstens ein Schiebesegment (201) einer ersten Gruppe, wobei das oder jedes Schiebesegment (201) der ersten Gruppe in wenigstens einer Expansionsrichtung in einer ersten Ebene verschiebbar ist, als wenigstens ein Schiebesegment (136) einer zweiten Gruppe, wobei das oder jedes Schiebesegment (136) der zweiten Gruppe in einer zu der oder jeder Expansionsrichtung rechtwinklig ausgerichteten Erweiterungsrichtung in wenigstens eine von der ersten Ebene verschiedene zweite Ebene verschiebbar ist, und als wenigstens ein Schiebesegment (139) einer dritten Gruppe, wobei das oder jedes Schiebesegment (139) der dritten Gruppe sowohl in die oder eine Expansionsrichtung in der ersten Ebene als auch in die zweite Richtung in die oder eine zweite Ebene verschiebbar ist, ausgebildet sind, wobei wenigstens ein Schiebesegment (139) der dritten Gruppe mit jeweils einem Schiebesegment (136, 201) der beiden anderen Gruppen in Eingriff ist, **dadurch gekennzeichnet, dass** Schiebesegmente (136, 139, 201) der drei Gruppen mit rechtwinklig zueinander ausgerichteten, an dem Zentralsegment (403) und an den Schiebesegmenten (136, 139, 201) jeweils an deren Wänden angebrachten Führungen (406, 509) und mit Paaren von durch einkragende Ränder (803) sowie gegenüber den einkragenden Rändern (803) länger ausgebildete auskragende Ränder (806) jeweils mit zwischenliegenden Dichtlippen (809) gebildete umlaufenden Anlagebereichen (1109) derart ausgebildet sind, dass einkragende Ränder (803) und auskragende Ränder (806) von Schiebesegmenten (136, 139) der zweiten Gruppe beziehungsweise der dritten Gruppe innerhalb der jeweiligen Gruppe paarweise miteinander in Eingriff bringbar sind.

2. Baukonstruktion nach Anspruch 1, **dadurch gekennzeichnet, dass** die Führungen (406, 509) jeweils über eine Führungsschiene (1103, 1203) und über einen mit der betreffenden Führungsschiene (1103, 1203) in Eingriff stehenden Führungswagen (1106, 1206) verfügen.

3. Baukonstruktion nach Anspruch 1 oder Anspruch 2, **dadurch gekennzeichnet, dass** die Schiebesegmente (136, 139, 201) der drei Gruppen derart ineinander verschiebbar gelagert sind, dass das Minimalvolumen der Baukonstruktion (115) in der Kompaktanordnung durch vollständiges Ineinanderschieben der Schiebesegmente (136, 139, 201) der drei Gruppen mit eng benachbart zueinander angeordneten Seitenwänden und Deckwänden mit einem wandfreien Innenraum (203) dem von dem äußersten Schiebesegment (136, 139) einer der Gruppen eingenommenen Volumen entspricht.

4. Baukonstruktion nach einem der Ansprüche 1 bis 3, **dadurch gekennzeichnet, dass** das Zentralfestsegment (403) und Schiebesegmente (136) der zweiten Gruppe jeweils mit zwei Schiebesegmenten (139, 201) der ersten Gruppe und der dritten Gruppe in Eingriff sind, wobei die beiden Schiebesegmente (139, 201) der ersten Gruppe und der dritten Gruppe auf einander gegenüber liegenden Seiten des mit ihnen in Eingriff befindlichen Zentralfestsegments (403) beziehungsweise Schiebesegments (136) der zweiten Gruppe angeordnet sind.

5. Baukonstruktion nach einem der Ansprüche 1 bis 4, **dadurch gekennzeichnet, dass** Schiebesegmente (139, 201) der ersten Gruppe sowie der dritten Gruppe in zwei rechtwinklig zueinander ausgerichteten Expansionsrichtungen verschiebbar sind und dass Schiebesegmente (139, 201) der ersten Gruppe sowie der dritten Gruppe in Eckbereichen zwischen mit Schiebesegmenten (136) der zweiten Gruppe beziehungsweise mit dem Zentralfestsegment (403) in Eingriff stehenden Schiebesegmenten (139, 201) der ersten Gruppe sowie der dritten Gruppe in Eingriff sind.

6. Baukonstruktion nach einem der Ansprüche 1 bis 5, **dadurch gekennzeichnet, dass** die auskragenden Ränder (806) und die einkragenden Ränder (803) wechselweise miteinander in Eingriff sind, um bei Verschieben eines Schiebesegments (136, 139, 201) eine passive Mitnahme von anderen Schiebesegmenten (136, 139, 201) sicherzustellen.

7. Baukonstruktion nach einem der Ansprüche 1 bis 6, **dadurch gekennzeichnet, dass** Schiebesegmente (136) einer Gruppe und das Zentralfestsegment (403) mit Türflügeln (154, 157) ausgestattet sind, die in der Expansionsstellung dieser Schiebesegmente (136) in den verschiedenen Ebenen miteinander fluchtend angeordnet sind.

8. Baukonstruktion nach einem der Ansprüche 1 bis 7, **dadurch gekennzeichnet, dass** an dem oder jedem mit dem Zentralfestsegment (403) in Eingriff stehenden Schiebesegment (139) der ersten Gruppe wenigstens ein Trägerholm (142) angebracht ist.

9. Baukonstruktion nach Anspruch 8, **dadurch gekennzeichnet, dass** sich der Trägerholm (142) oder Trägerholme (142) in der ersten Richtung erstrecken.

10. Baukonstruktion einem der Ansprüche 1 bis 9, **dadurch gekennzeichnet, dass** an wenigstens einem Schiebesegment (136, 139, 201) wenigstens einer Gruppe und an dem Zentralfestsegment (403) als Gerätschaften wahlweise Einbauelemente (206, 209, 212, 215, 218, 221, 309, 503, 603, 606) angebracht sind.

11. Baukonstruktion nach Anspruch 10, **dadurch gekennzeichnet, dass** in der Kompaktstellung wenigstens einige Einbauelemente (206, 209, 212, 215, 218, 221, 309, 503, 603, 606) direkt aneinander grenzen.

12. Baukonstruktion nach Anspruch 10 oder Anspruch 11, **dadurch gekennzeichnet, dass** wenigstens ein Einbauelement (309, 503) mit einer flexiblen Versorgungsleitung (409) verbunden ist.

13. Fahrzeug, ausgestattet mit einer Baukonstruktion nach einem der Ansprüche 1 bis 12.

14. Fahrzeug nach Anspruch 13 soweit auf Anspruch 8 oder Anspruch 9 rückbezogen, **dadurch gekennzeichnet, dass** der Trägerholm (142) oder Trägerholme (142) verschiebbar an einer Karosserie (106) des Fahrzeugs (103) gelagert ist beziehungsweise sind.

15. Fahrzeug nach Anspruch 13 oder Anspruch 14 soweit auf Anspruch 12 rückbezogen, **dadurch gekennzeichnet, dass** die Versorgungsleitung (409) oder Versorgungsleitungen (409) mit dem Fahrzeug (103) verbunden sind.

## Claims

1. Superstructure for accommodating, selectively, equipment arranged in an interior space (203) and, when required, providing a useable space expanding the interior space (203), with a central solid segment (403) and with a number of sliding segments (201), mounted slideably in relation to the central solid segment (403) in at least one expansion direction within a plane, which are slideable between a compact position with a minimum volume and an expanded position with a maximum volume, wherein the sliding segments (136, 139, 201) are configured as at least one sliding segment (201) of a first group, wherein the or each sliding segment (201) of the first group is displaceable in at least one expansion direction within a first plane, as at least one sliding segment (136) of a second group, wherein the or each sliding segment (136) of the second group is slideable in an expansion direction oriented perpendicularly to the, or each, expansion direction within at least one second plane different from the first plane, and as at least one sliding segment (139) of a third group, wherein the, or each, sliding segment (139) of the third group is slideable both in the, or an, expansion direction within the first plane as well as in the second direction within the, or a, second plane, wherein at least one sliding segment (139) of the third group engages with in each case one sliding segment (136, 201) of the two other groups, **characterised in that** sliding segments (136, 139, 201) of the three groups are designed with guides (406, 509) oriented at right angles to each other, in each case attached to the walls of the central segment (403) and the sliding segments (136, 139, 201), and with pairs of peripheral contact regions (1109) formed by inwardly-projecting edges (803) and outwardly-projecting edges (806) which are longer than the inwardly-projecting edges (803), in each case with intermediate sealing lips (809), such that inwardly-projecting edges (803) and outwardly-projecting edges (806) of sliding segments (136, 139) of the second group or the third group can be brought into engagement, in pairs, within the respective group.

2. Superstructure according to claim 1, **characterised in that** the guides (406, 509) in each case have a guide rail (1103, 1203) and a guide carriage (1106, 1206) engaging with the relevant guide rail (1103, 1203).

3. Superstructure according to claim 1 or claim 2, **characterised in that** the sliding segments (136, 139, 201) of the three groups are mounted so as to slide into one another such that, due to the sliding segments (136, 139, 201) of the three groups sliding completely into one another with side walls and top walls arranged closely adjacent to one another with a wall-free interior space (203), the minimum volume of the superstructure (115) in the compact arrangement corresponds to the volume occupied by the outermost sliding segment (136, 139) of one of the groups.

4. Superstructure according to one of the claims 1 to 3, **characterised in that** the central solid segment (403) and sliding segments (136) of the second group in each case engage with two sliding segments (139, 201) of the first group and the third group, wherein the two sliding segments (139, 201) of the first group and the third group are arranged on opposite sides of the central solid segment (403) or sliding segment (136) of the second group engaging with them.

5. Superstructure according to one of the claims 1 to 4, **characterised in that** sliding segments (139, 201) of the first group and the third group are slideable in two expansion directions oriented at right angles to each other and that sliding segments (139, 201) of the first group as well as the third group engage in corner regions between sliding segments (139, 201) of the first group as well as the third group engaging with sliding segments (136) of the second group or with the central solid segment (403).

6. Superstructure according to one of the claims 1 to 5, **characterised in that** the outwardly-projecting edges (806) and the inwardly-projecting edges (803) engage alternatingly with one another in order to ensure that when a sliding segment (136, 139, 201) moves, other sliding segments (136, 139, 201) are passively moved along with it.

7. Superstructure according to one of the claims 1 to 6, **characterised in that** sliding segments (136) of a group and the central solid segment (403) are equipped with doors (154, 157) which, in the expanded position of these sliding segments (136), are arranged in the different planes so as to align with one another.

8. Superstructure according to one of the claims 1 to 7, **characterised in that** at least one supporting strut (142) is attached to the, or each, sliding segment (139) of the first group engaging with the central solid segment (403) .

9. Superstructure according to claim 8, **characterised in that** the supporting strut (142) or supporting struts (142) extend in the first direction.

10. Superstructure according to one of the claims 1 to 9, **characterised in that** fitting elements (206, 209, 212, 215, 218, 221, 309, 503, 603, 606) are attached, selectively, as equipment, to at least one sliding segment (136, 139, 201) of at least one group and to the central solid segment (403).

11. Superstructure according to claim 10, **characterised in that** in the compact position at least some fitting elements (206, 209, 212, 215, 218, 221, 309, 503, 603, 606) direct adjoin one another.

12. Superstructure according to claim 10 or claim 11, **characterised in that** at least one fitting element (309, 503) is connected with a flexible supply line (409).

13. Vehicle equipped with a superstructure according to one of the claims 1 to 12.

14. Vehicle according to claim 13, insofar as it refers back to claim 8 or claim 9, **characterised in that** the supporting strut (142) or supporting struts (142) is/are mounted displaceably on a bodywork (106) of the vehicle (103).

15. Vehicle according to claim 13 or claim 14, insofar as it refers back to claim 12, **characterised in that** the supply line (409) or supply lines (409) are connected with the vehicle (103).

## Revendications

1. Structure pour contenir des équipements disposés au choix dans un espace intérieur (203) et pour la mise à disposition le cas échéant d'un espace utile agrandissant l'espace intérieur (203) avec un segment central fixe (403) et avec un certain nombre de segments coulissants (201) disposés de façon à pouvoir être déplacés dans au moins une direction d'expansion dans un plan par rapport au segment central fixe (403), lesdits segments coulissants (201) étant déplaçables entre une position compacte avec un volume minimal et une position d'expansion avec un volume maximal, pour laquelle les segments coulissants (136, 139, 201) sont formés, d'au moins un segment coulissant (201) d'un premier groupe, le ou chaque segment coulissant (201) du premier groupe étant déplaçable dans au moins une direction d'expansion dans un premier plan, d'au moins un segment coulissant (136) d'un deuxième groupe, le ou chaque segment coulissant (136) du deuxième groupe étant déplaçable dans une direction d'extension disposée perpendiculairement à la ou chaque direction d'expansion, dans au moins un deuxième plan distinct du premier plan, et d'au moins un segment coulissant (139) d'un troisième groupe, le ou chaque segment coulissant (139) du troisième groupe étant déplaçable aussi bien dans la ou une direction d'expansion dans le premier plan que dans la deuxième direction dans le ou un deuxième plan, au moins un segment coulissant (139) du troisième groupe étant en prise avec à chaque fois un segment coulissant (136, 201) des deux autres groupes, **caractérisée en ce que** des segments coulissants (136, 139, 201) des trois groupes sont formés avec des dispositifs de guidage (406, 509) formés à angle droit les uns par rapport aux autres et disposés sur le segment central (403) et sur les segments coulissants (136, 139, 201) respectivement sur leurs parois, et avec des paires de zones de contact (1109) périphériques formées par des bords en saillie vers l'intérieur (803) ainsi que des bords en saillie vers l'extérieur (809) formés comme étant plus longs que les bords en saillie vers l'intérieur (803) et avec à chaque fois des lèvres d'étanchéité (809) entre eux, de telle sorte que des bords en saillie vers l'intérieur (803) et des bords en saillie vers l'extérieur (806) de segments coulissants (136, 139) du deuxième groupe respectivement du troisième groupe peuvent être, à l'intérieur de leurs groupes respectifs, mis en prise par paire les uns avec les autres.

2. Structure selon la revendication 1, **caractérisée en ce que** les dispositifs de guidage (406, 509) disposent chacun d'un rail de guidage (1103, 1203) et d'un chariot de guidage (1106, 1206) placé en prise avec le rail de guidage (1103, 1203) correspondant.

3. Structure selon la revendication 1 ou la revendication 2, **caractérisée en ce que** les segments coulissants (136, 139, 201) des trois groupes sont disposés de façon à pouvoir être déplacés les uns dans les autres d'une manière telle que le volume minimal de la structure (115), dans la position compacte obtenue par un déplacement intégral les uns dans les autres des segments coulissants (136, 139, 201) des trois groupes avec des parois latérales et des parois de couverture disposées les unes par rapport aux autres dans un voisinage étroit et avec un espace intérieur (203) sans paroi, correspond au volume occupé par le segment coulissant (136, 139) le plus extérieur de l'un des groupes.

4. Structure selon l'une des revendications 1 à 3, **caractérisée en ce que** le segment central fixe (403) et des segments coulissants (136) du deuxième groupe sont chacun en prise avec deux segments coulissants (139, 201) du premier groupe et du troisième groupe, les deux segments coulissants (139, 201) du premier groupe et du troisième groupe étant disposés sur des côtés opposés l'un à l'autre du segment coulissant fixe (403) respectivement du segment coulissant (136) situés en prise avec lesdits segments coulissants (139, 201).

5. Structure selon l'une des revendications 1 à 4, **caractérisée en ce que** des segments coulissants (139, 201) du premier groupe ainsi que du troisième groupe sont déplaçables dans deux directions d'expansion orientées à angle droit l'une par rapport à l'autre, et **en ce que** des segments coulissants (139, 201) du premier groupe ainsi que du troisième groupe sont, dans les coins, en prise entre des segments coulissants (139, 201) eux-mêmes en prise avec des segments coulissants (136) du deuxième groupe respectivement avec le segment central fixe (403).

6. Structure selon l'une des revendications 1 à 5, **caractérisée en ce que** les bords en saillie vers l'extérieur (806) et les bords en saillie vers l'intérieur (803) sont tour à tour en prise les uns avec les autres, de telle sorte que lors du déplacement d'un segment coulissant (136, 139, 201), un entraînement passif d'autres segments coulissants (136, 139, 201) soit garanti.

7. Structure selon l'une des revendications 1 à 6, **caractérisée en ce que** des segments coulissants (136) d'un groupe et le segment central fixe (403) sont équipés de vantaux de porte (154, 157), lesquels sont, dans la position d'expansion de ces segments coulissants (136), disposés de façon alignée les uns par rapport aux autres dans les différents plans.

8. Structure selon l'une des revendications 1 à 7, **caractérisée en ce qu'**au ou à chaque segment coulissant (139) du premier groupe disposé en prise avec le segment central fixe (403) est installé au moins un longeron de support (142).

9. Structure selon la revendication 8, **caractérisée en ce que** le longeron de support (142) ou des longerons de support (142) s'étendent dans la première direction.

10. Structure selon l'une des revendications 1 à 9, **caractérisée en ce qu'**en guise d'équipement des éléments encastrés (206, 209, 212, 215, 218, 221, 309, 503, 603, 606) sont installés dans au moins un segment coulissant (136, 139, 201) d'au moins un groupe et dans le segment central fixe (403).

11. Structure selon la revendication 10, **caractérisée en ce que** dans la position compacte au moins quelques éléments encastrés (206, 209, 212, 215, 218, 221, 309, 503, 603, 606) sont directement à la limite les uns des autres.

12. Structure selon la revendication 10 ou la revendication 11, **caractérisée en ce qu'**au moins un élément encastré (309, 503) est relié à un câble d'alimentation (409) flexible.

13. Véhicule, équipé avec une structure selon l'une des revendications 1 à 12.

14. Véhicule selon la revendication 13 telle que se référant à la revendication 8 ou à la revendication 9, **caractérisé en ce que** le longeron de support (142) ou des longerons de support (142) est, respectivement sont, monté(s) de façon mobile sur une carrosserie (106) du véhicule (103).

15. Véhicule selon la revendication 13 ou la revendication 14 telles que se référant à la revendication 12, **caractérisé en ce que** le câble d'alimentation (409) ou les câbles d'alimentation (409) sont reliées au véhicule (103).
